## Europäisches Patentamt
## European Patent Office
## Office européen des brevets

(19)

(11) Veröffentlichungsnummer: **0 137 959**
**B1**

(12)
# EUROPÄISCHE PATENTSCHRIFT

(45) Veröffentlichungstag der Patentschrift:
**17.12.86**

(51) Int. Cl.⁴: **B 23 B  47/34,** B 23 Q  11/10

(21) Anmeldenummer: **84109759.5**

(22) Anmeldetag: **16.08.84**

(54) **Horizontal- Bohr- und Fräsmaschine mit einer horizontal verstellbaren Bohr- und Frässpindel und einer Planscheibe mit Planschieber.**

(30) Priorität: **19.08.83  DE 3329964**

(43) Veröffentlichungstag der Anmeldung:
**24.04.85 Patentblatt 85/17**

(45) Bekanntmachung des Hinweises auf die Patenterteilung:
**17.12.86 Patentblatt 86/51**

(84) Benannte Vertragsstaaten:
**AT BE CH DE FR GB IT LI NL SE**

(56) Entgegenhaltungen:
**EP-A-0 072 657**
**DE-A-1 402 924**
**DE-A-3 024 585**
**DE-B-2 820 165**
**DE-U-1 883 645**

(73) Patentinhaber: **Scharmann GmbH & Co., Hugo-Junkers- Strasse 12- 32, D-4050 Mönchengladbach 2 (DE)**

(72) Erfinder: **Malzkorn, Matthias, Bahnstrasse 19, D-4053 Jüchen 3 (DE)**

(74) Vertreter: **Wangemann, Horst, Dipl.- Ing., Stresemannstrasse 28, D-4000 Düsseldorf (DE)**

EP 0 137 959 B1

LIBER, STOCKHOLM 1986

## Beschreibung

Die Erfindung bezieht sich auf eine Horizontal-Bohr- und Fräsmaschine der im Oberbegriff des Hauptanspruches genannten Art.

Derartige Bohr- und Fräsmaschinen sind bekannt. - Auch sind auf anderen Gebieten der Technik Bohreinrichtungen bekannt, bei denen ein Kühlmittel durch eine Bohrstange einem Werkzeug zugeführt wird. - So ist z. B. durch die DE-A-28 20 165 eine Bohr- und Fräsmaschine mit einer horizontal verstellbaren Bohr- und Frässpindel bekannt, bei der ein Kühlmittel durch die Spindel und das daran befestigte Werkzeug der Bearbeitungsstelle an dem Werkstück zugeführt wird. - Ein Kühlmittel mittels eines flexiblen Schlauches von einem Werkzeugmaschinenteil oder -abschnitt zu einem diesem gegenüber bewegten zweiten Maschinenteil zu leiten, ist aus dem DE-Gebrauchsmuster 1 883 645 bekannt.

Diesem Stand der Technik gegenüber besteht die Aufgabe des Erfindungsgegenstandes darin, eine Horizontal- Bohr- und Fräsmaschine der eingangs genannten Gattung zu schaffen, die eine genau bestimmbare Zuführung an Kühlmittel zu dem Werkzeug in jeder Stellung des Planschiebers auch bei in das Werkstück hineinragendem Werkzeug und Werkzeughalter gewährleistet, wobei vorhandene Kühlmittelsysteme mit Zuführung eines Kühlmittels durch die hohle Bohrspindel Anwendung finden können. Hierbei soll das Aus- und Einwechseln des wesentlichen Teils oder der wesentlichen Teile der Mittel zur Zuführung des Kühlmittels zu dem Planschieber der Planscheibe ohne manuelle Tätigkeit erfolgen können wie auch die Mittel zur Zuführung des Kühlmittels zu dem Werkzeug an dem Planschieber konstruktiv einfach und betriebssicher sein sollen.-Hierbei ist zu berücksichtigen, daß der Werkzeughalter und mit ihm das Werkzeug eine dreifache Bewegung ausführt, nämlich eine Drehbewegung um die Mittelachse der Bohrspindel und der Planscheibe, zweitens eine hin- und hergehende Bewegung in Längsrichtung der Bohrspindel bzw. Achsrichtung der Planscheibe und ferner eine radiale Bewegung, die dem Werkzeughalter durch den Planschieber vermittelt wird. Ferner ist zu berücksichtigen, daß die Werkzeuge der Bohrspindel und der Planschieberkassette automatisch gewechselt werden sollen und hierfür die Kühlmittelzufuhr gesichert bzw. unterbrochen wird.

Zur Lösung der gestellten Aufgabe sieht die Erfindung die Merkmale des kennzeichnenden Teils des Hauptanspruches vor. Die Unteransprüche beinhalten Merkmale, die der Verbesserung und Weiterbildung des Merkmals des Hauptanspruches dienen.

Die Erfindung löst das Problem, daß zwischen der Bohrspindel und der Planscheibe einerseits eine relative Drehbewegung, d.h. ein Drehzahlunterschied, vorhanden ist, andererseits der Planschieber eine Radialbewegung gegenüber der Planscheibe ausführt, wobei dafür gesorgt wird, daß wahlweise mit einem Werkzeug an der Bohrspindel oder aber mit einem Werkzeug am Planschieber gearbeitet werden kann.

Der Vorteil der erfindungsgemäßen Maschine ist darin zu sehen, daß außer der Lösung der gestellten Aufgabe und der Beherrschung des vorstehend genannten Problems der Adapter mit einfachen Mitteln von der Bohrspindel und der Planscheibe ohne manuelle Tätigkeit gelöst und lagegerecht in ein Werkzeugmagazin gebracht bzw. aus diesem in die Bohrspindel eingesetzt werden kann. Im Sinne einer Automatisation der Arbeitsgänge wird auch für die Kühlmittelzufuhr zu zwei verschiedenen Verbraucherstellen eine erhebliche Erleichterung und Zeitersparnis geschaffen. Trotz der unterschiedlichen Drehbewegung von Bohrspindel und Planscheibe wird ein sicheres Zuführen des Kühlmittels aus der Bohrspindel zu dem Werkzeughalter an dem Planschieber bzw. dessen Kassette ohne Leckage gewährleistet.

Auf der Zeichnung ist ein Ausführungsbeispiel der wesentlichen, die Erfindung ausmachenden Teile der Bohr- und Fräsmaschine dargestellt und zwar zeigt

Fig. 1 die Ausbildung und Lage der Planscheibe des Planschiebers, der an diesem angeordneten Werkzeugkassette, dem Werkzeughalter mit Werkzeug sowie der Bohrspindel,

Fig. 2 das vordere Bohrspindelende mit dem Adapter,

Fig. 3 das Ende des flexiblen Schlauches mit dem an dem Planschieber angeordneten Blöckchen und

Fig. 4 eine Einzelheit der Verbindung des Adapters mit dem vorderen Ende der Bohrspindel in gegenüber Fig. 1 abgewandelter, aber äquivalenter Form.

Die Bohrspindel 1 sowie die Planscheibe 2 sind an dem auf- und abwärts bewegbaren Spindelkasten angeordnet. Die Planscheibe trägt den Planschieber 3, der in Richtung des Doppelpfeiles 4 an der Planscheibe radial verstellbar ist und die Werkzeugkassette 5 trägt, in deren konischer Ausnehmung 6 der entsprechend ausgebildete Schaft 7 des Werkzeughalters 8 einsetzbar ist, der an seinem vorderen Ende das Werkzeug 9 trägt.

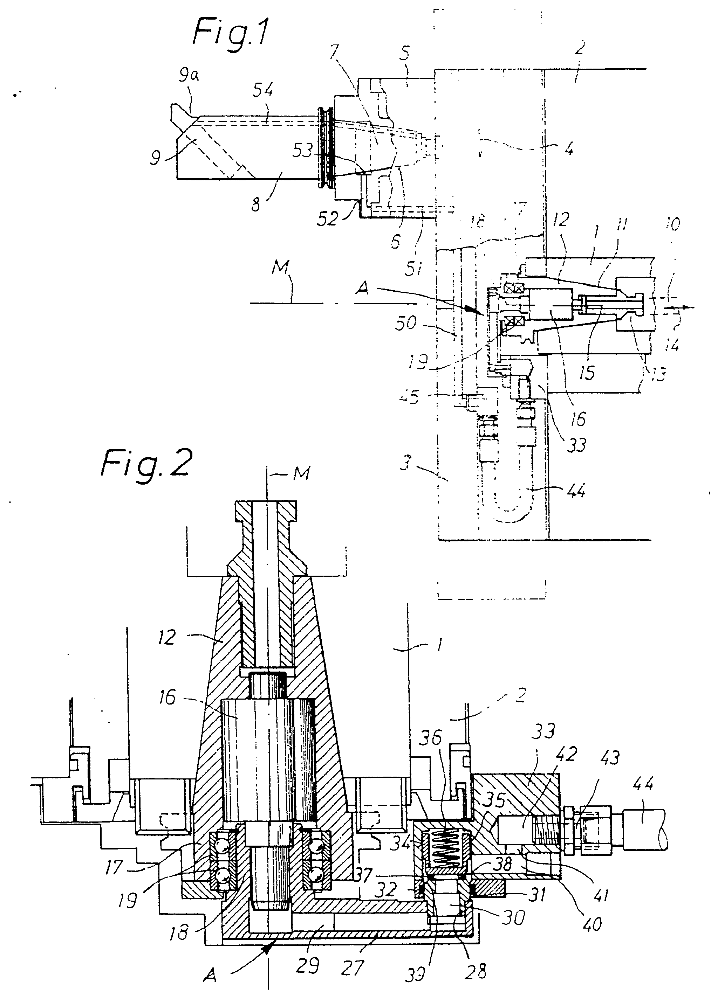

Die Bohrspindel 1 weist eine mit der allgemeinen Bezugsziffer 10 versehene mittlere Längsbohrung auf, durch die mit Hilfe einer nicht dargestellten Pumpe Kühlmittel an das vordere Ende der Bohrspindel 1 gefördert wird. Bei Stillsetzen der Pumpe wird kein flüssiges Kühlmittel dem vorderen Spindelende zugeführt, Die Bohrspindel hat eine konische Ausnehmung 11, in die entweder bei Arbeit nur mit der Bohrspindel der Werkzeugkonus einzusetzen ist, oder aber die, wie Fig. 1 zeigt, zur Aufnahme eines konischen, hohlen Kegelkopfes 12 dient. Dieser besitzt an seinem hinteren 1 de bei 13 eine Ausbildung wie der Werkzeugkonus mit einer Ringnut oder einer äquivalenten Gestaltung, um mit Hilfe einer nicht dargestellten Anzugsvorrichtung des Kegelkopf 12 in Richtung des Pfeiles 14 achsial in die konische Ausnehmung 11 zu ziehen und damit den Kegelkopf dicht mit der Bohrspindel 1 zu verspannen.

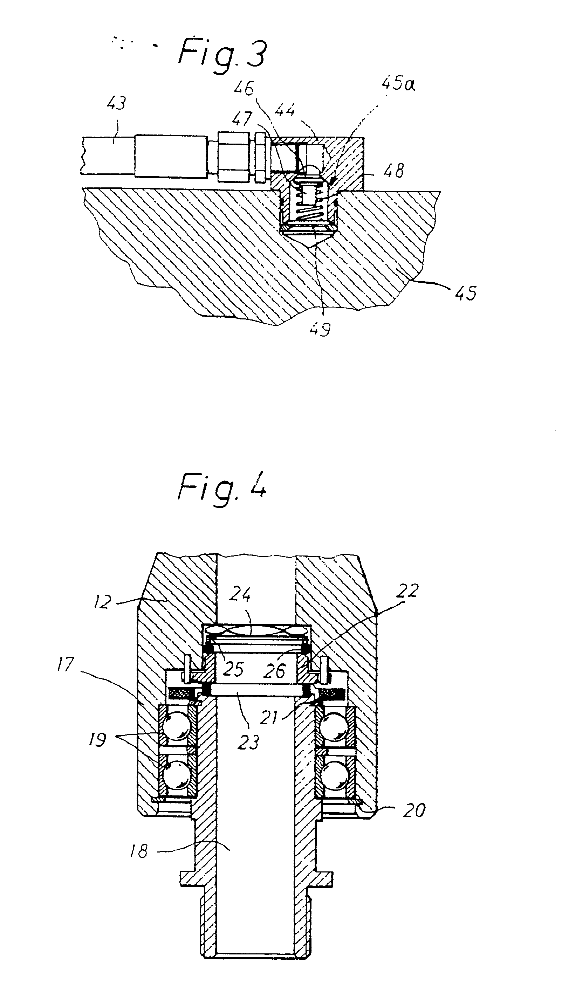

Der Kegelkopf 12 besitzt in Verlängerung der Längsbohrung 10 der Bohrspindel 1 eine Bohrung 15, die in eine Erweiterung 16 übergeht. Da die Bohrspindel 1 und die Planscheibe 2 eine unterschiedliche Drehgeschwindigkeit haben, ist zwischen diesen Teilen ein Adapter A vorgesehen, der einen in sich geschlossenen und in seiner Gesamtheit transportierbaren Teil darstellt. Der hohle Kegelkopf 12 bildet hierbei den in vorstehend beschriebener Weise mit der Bohrspindel 1 zu verbindenden Adapterabschnitt. Der Kegelkopf 12 ist mit einem ringförmigen Kragen 17 versehen, zwischen dessen Innenseite und einem Rohrstück 18 ein Doppelkugellager 19 vorgesehen ist, das durch die Ringe 20, 21 in seiner Lage gegenüber dem Kragen 17 und dem Rohrstück 18 gehalten wird (Fig. 4). Zwischen einem mit dem Kragen 17 des Kegelkopfes 12 drehfest verbundenen, schwimmenden Gleitring 22 und der Stirnseite des Rohrstückes 18 befindet sich eine Dichtung 23, die mit Hilfe einer Feder 24 und einem Zwischenring 25 mit Dichtung 26 den Zwischenraum zwischen dem Rohrstück 18 und dem Kegelkopf 12 des Adapters A trotz der unterschiedlichen Drehgeschwindigkeit dieser Teile abdichtet.

Mit dem Rohrstück 18 ist ein rechtwinkelig hierzu angeordneter hohler arm 27 verbunden, der an seinem freien Ende einen Übergangsteil 28 trägt und der um die Mittelachse M der Bohrspindel schwenkbar ist und der mit dem Kegelkopf 12 den Adapter bildet, der der Zuführung des Kühlmittels von der Bohrspindel 1 zu einem Aufnahmeblöckchen 33 dreht, das an der Planscheibe 2 befestigt ist (Fig. 2).

Der so beschriebene Adapter bildet eine Baueinheit und kann mechanisch einem Werkzeugmagazin entnommen und mit seinem Kegelkopf 12 in die Bohrspindel 1 eingesetzt und aus dieser wieder herausgenommen und in das Magazin gebracht werden, wobei die Teile des Adapters die jeweils entsprechende Lage zum Verbinden mit dem Planschieber bzw. mit der Bohrspindel erhalten.

Wie Fig. 2 erkennen läßt, sind das Rohrstück 18, die Bohrung 29 in dem Arm 27 und die Bohrung 30 in dem Übergangsteil 28 jeweils rechtwinklig zueinander gelegen, so daß die Bohrung 30 parallel zu dem Rohrstück 18 gelegen ist.

Der Übergangsteil 28 ist dichtend in eine Bohrung 31 eines mit dem Aufnahmeblöckchen 33 verbundenen Teils 32 einsetzbar und wird dort gehalten, wenn der Kegelkopf 12 in der Bohrspindel verspannt wird. Die Bohrung 30 findet inre Fortsetzung in einer Bohrung 34 des Blöckchens 33, die einen Verschlußschieber 35 aufnimmt, der unter Wirkung einer Feder 36 steht, die den Schieber gegen den Übergangsteil 28 zu drücken sucht. Die Stirnseite des Schiebers trägt kreisförmig angeordnete und zwischen sich Abstände belassende Nocken 37, die gegen den Übergangsteil 28 anliegen, wenn dieser in die Aufnahmebohrung 31 des Teils 33 eingeführt ist. Wird der Adapter A mit seinen Teilen 12, 27 und 28 von der Bohrspindel 1 entfernt, so drückt die Feder 36 den Schieber 35 (in Fig. 2 nach unten) in dichtende Anlage seines abgeschrägten Dichtungsrandes 38 an die entsprechend ausgebildete (in Fig. 2 rechte) Stirnkante des Teils 28, so daß die den Schieber 35 aufnehmende Bohrung 34 nach außen hin abgeschlossen ist, wenn z.B. bei abgenommenem Planschieberwerkzeug und Werkzeughalter nur mit der Bohrspindel gearbeitet wird.

Die den Schieber 35 aufnehmende Bohrung 34 steht mit einer Radialbohrung 40 des Blöckchens 33 in Verbindung, so daß bei geöffnetem Schieber Kühlmittel über diese radiale Bohrung, Zwischenbohrungen 41, 42 zu einem Gewindestutzen 43 gelangen kann, der über einen flexiblen Schlauch 44 mit einem Blöckchen 45 verbunden ist, das an dem Planschieber 3 befestigt ist. Dieses Blöckchen besitzt ein Rückschlagventil 45a aus einem Ventilteller 46, einem Ventilschaft 47 und einer Feder 48, das so angeordnet ist, daß der Federdruck das Ventil nach Abschalten des Kühlmittelzuflusses beim Wechseln des Werkzeugs 9 oder des Werkzeughalters 8 schließt, weil auf die entsprechende Stirnseite des Ventiltellers 46 kein Kühlmitteldruck ausgeübt wird, d. h. in der dem Ventil nachgeschalteten Leitung ein Druckabfall festzustellen ist.

Mit dem Blöckchen 45 an dem Planschieber 3 ist eine Leitung 50 an oder in dem Planschieber vorgesehen, von der aus eine Zweigleitung 51 in und durch die Werkzeugkassette 5 führt. An diese Leitung schließt sich eine weitere Leitung 52 an, die in einer Ringnut oder Ringleitung 53 endet. - Der Werkzeughalter 8, der an seinem Ende die gleiche Ausbildung besitzt wie der Kegelkopf 12, weist eine in die Ringnut 53 mündende oder übergehende Verbindung zu der Längsbohrung oder Leitung 54 in dem Werkzeughalter 8 auf, die bis an das vordere Ende des Werkzeughalters in unmittelbarer Nähe des aus dem Werkzeughalter herausragenden Werkzeugkopfes 9a verläuft.

Erfolgt ein Wechsel des Werkzeughalters 8, so schließt sich das Rückschlagventil in dem Blöckchen 45, solange kein Werkzeughalterin die Kassette 5 eingesetzt ist. Ist ein neues Werkzeug mit Werkzeughalter in die Kassette 5 eingesetzt, öffnet sich das Rückschlagventil 45 durch Einschalten der Kühlmittelzufuhr und Kühlmittel kann zu dem Werkzeug 9 gelangen.

Wird ausschließlich mit der Bohrspindel und einem in diese statt des Kegelkopfes 12 eingesetzten Werkzeug gearbeitet, so verschließt der Schieber 35 die Bohrung 34 zu dem flexiblen Schlauch 44 und verhindert damit eine Verschmutzung des Schlauches und der daran anschließenden Teile.

Der Teil 28 kann auch einen mit dem Blöckchen 33 einheitlichen Teil bilden.

**Patentansprüche**

1. Horizontal- Bohr- und Fräsmaschine mit einer horizontal verstellbaren Bohr- und Frässpindel (1) und einer Planscheibe (2) mit Planschieber (3) und Werkzeugkassette (5), gekennzeichnet durch einen Adapter (A), dessen hohler Kegelkopf (12) in die konische Aufnahmebohrung (11) der hohlen, ein Kühlmittel führenden Bohr- und Frässpindel (1) lösbar einsetzbar ist und der einen dem Kegelkopf (12) gegenüber drehbaren hohlen Dreharm (27) aufweist, der mit einem an der Planscheibe (2) angeordneten Teil (33) lösbar verbindbar ist, wobei dieser Teil über einen flexiblen Schlauch (44) mit einer Kühlmittelleitung (50) in dem Planschieber (3) verbunden ist.

2. Horizontal- Bohr- und Fräsmaschine nach Anspruch 1, dadurch gekennzeichnet, daß der hohle Kegelkopf (12) ein die Relativdrehung zwischen der Bohrspindel (1) und dem mit der Planscheibe lösbar verbundenen Dreharm (27) ausgleichendes Kugellager (19) und eine die Bohrungen dieser beiden Teile gegeneinander abdichtende Dichtungseinrichtung (22-26) aufweist.

3. Horizontal- Bohr- und Fräsmaschine nach Anspruch 1 und 2, dadurch gekennzeichnet, daß der mit der Planscheibe (2) verbundene, das eine Ende des Schwenkarmes (27) und das eine Ende des flexiblen Schlauchs (44) aufnehmende Teil (33) ein Verschlußventil (33-37) aufnimmt, das beim Ansetzen des entsprechenden Schwenkarmendes sich öffnet, beim Lösen dieses Teils sich schließt.

4. Horizontal- Bohr- und Fräsmaschine nach Anspruch 1 und einem der Ansprüche 2 und 3, dadurch gekennzeichnet, daß der Planschieber (3) ein das eine Ende des flexiblen Schlauches (44) aufnehmendes Blöckchen (45) trägt, das ein Rückschlagventil (45a) aufweist.

5. Horizontal- Bohr- und Fräsmaschine nach Anspruch 1 und einem oder mehreren der Ansprüche 1 bis 4, dadurch gekennzeichnet, daß der Planschieber (3) und die Werkzeugkassette (5) mit Kühlmittelleitungen oder -bohrungen (50-52) versehen sind und die Kassette (5) eine das keglige Ende des Werkzeugs umfassende Ringnut (53) besitzt.

6. Horizontal- Bohr- und Fräsmaschine nach Anspruch 1 und einem oder mehreren der Ansprüche 2 bis 5, dadurch gekennzeichnet, daß der Adapter (A) durch eine Greifereinrichtung aus einem der Maschine zugeordneten Werkzeugmagazin winkelgerecht in die Bohrspindel und von dieser in das Werkzeugmagazin einsetzbar ist.

**Claims**

1 A horizontal boring and milling machine comprising a horizontally adjusting drilling and milling spindle (1) and a face-plate (2) having a face-plate slide (3) and a tool magazine (5), characterized by an adapter (A), whose hollow cone head (12) may be detachably inserted into the conical receiving hole (11) of the hollow drilling and milling spindle (1) with a coolant flowing through it, and which has a hollow swivel arm (27) able to be turned in relation to the cone head (12), such arm (27) being able to be detachably comnected with a part (33) arranged on the face-plate (2), and such part is connected via a flexible pipe (44) with a coolant duct (50) in the face-plate slide (3).

2 The horizontal drilling and milling machine as claimed in claim 1, characterized in that the hollow cone head (12) has a ball bearing (19) to allow for relative turning between the drill spindle (I) and the swivel arm (27) connected with the face-plate and a sealing means (22 to 26) producing a seal between these two parts.

3 The horizontal drilling and milling machine as claimed in claims 1 and 2 characterized in that the part (33) connected with the face-plate (2) and receiving the one end of the swivel arm (21) and the one end of the flexible pipe (44) has a shutoff valve (33 to 37) in it which on mounting the respective swivel arm end opens, and closes when this part is detached.

4 The horizontal drilling and milling machine as claimed in claim 1 and in claim 2 or claim 3, characterized in that the face-plate slide (3) bears a small block (45) receiving the one end of the flexible pipe (44), said block having a check valve (45a).

5 The horizontal drilling and milling machine as claimed in claim 1 and any one of the claims 1 through 4, characterized in that the face-plate slide (3) and the tool magazine (5) are provided with a coolant pipe or holes (50 through 52) and the magazine (5) possesses an annular groove (53) encompassing the cone end of the tool.

6 The horizontal drilling and milling machine as claimed in claim 1 and any one or more of the claims 2 through 5, characterized in that the adapter (A) may be taken by a gripping means from a further magazine of the machine and placed at the necessary angle into the drilling spindle and from which it may be inserted into the said tool magazine.

**Revendications**

1. Machine foreuse et fraiseuse horizontale comportant une broche de perçage et de fraisage (1) à déplacement horizontal et un plateau circulaire (2) avec une coulisse radiale (3) et un récepteur d'outil (5), caractérisée en ce qu'elle présente un adaptateur (A) dont la tête conique creuse (12) peut être insérée de manière amovible dans le logement conique (11) de la broche de perçage et de fraisage (1) creuse, par laquelle un liquide d'arrosage est alimenté, comportant un bras creux (27) tournant par rapport à ladite tête conique (12) et relié de manière amovible à un élément (33) installé sur le plateau circulaire (2), où ledit élément (33) est relié au moyen d'un flexible (44) à un conduit (50) prévu dans la coulisse radiale (3) et destiné au passage du liquide d'arrosage.

2. Machine foreuse et fraiseuse horizontale suivant la revendication 1, caractérisée en ce que la tête conique creuse (12) comporte un roulement à billes (19) compensant, à la manière d'un différentiel, la rotation relative entre la broche de perçage (1) et le bras tournant (27) relié de manière amovible au plateau circulaire (2), ainsi qu'un dispositif (22-26) assurant l'étanchéité des orifices de ces deux pièces, lorsqu'elles se trouvent connectées.

3. Machine foreuse et fraiseuse horizontale suivant les revendications 1 et 2, caractérisée en ce que l'élément (33) relié au plateau circulaire (2) et recevant une extrémité du bras mobile (27) et une extrémité du flexible (44), renferme une soupape de retenue (33 - 37) s'ouvrant lors de la mise en place de l'extrémité correspondante du bras mobile et se fermant lors de la dépose de cette pièce.

4. Machine foreuse et fraiseuse horizontale suivant la revendication 1 et une des revendications 2 et 3, caractérisée en ce que la coulisse radiale (3) est pourvue d'un bloc récepteur (45) recevant une extrémité du flexible (44) et renfermant une soupape de retenue (45a).

5. Machine foreuse et fraiseuse horizontale suivant la revendication 1 et une ou plusieurs des revendications 1 à 4, caractérisée en ce que la coulisse radiale (3) et le récepteur d'outil (5) sont pourvus de conduits ou d'orifices (50-52) de passage du liquide d'arrosage et en ce que le récepteur d'outil (5) comporte une gorge annulaire (53) englobant l'extrémité conique de l'outil.

6. Machine foreuse et fraiseuse horizontale suivant la revendication 1 et une ou plusieurs des revendications 2 à 5, caractérisée en ce que l'adaptateur (A) peut être extrait d'un magasin d'outils associé à la machine, inséré dans la broche de perçage selon l'angle correct, extrait de celle-ci et repositionné dans le magasin d'outils, à l'aide d'un dispositif de saisie (manipulateur d'outils).

*Fig.1*

*Fig.2*

# Fig. 3

*43   47   46   44   45a*

*48*

*45*

*49*

# Fig. 4

*12   24   22*

*17*

*25   26*

*19   21*

*23*

*20*

*18*